# EUROPEAN PATENT APPLICATION

(11) **EP 4 837 403 A1**
(43) Date of publication of application: **11.11.2026**
(21) Application number: 26167877.5
(22) Date of filing: 26.03.2026
(51) Int. Cl.: A01C 7/20

(54) **FURROW DEPTH DETECTION SYSTEM**

(30) Priority: 09.05.2025 US 202519203571
(71) Applicant: Deere & Company, Moline, IL 61265 (US)
(72) Inventor: Orth, Matthew, 68163 Mannheim (DE); Kise, Michio, 68163 Mannheim (DE); Mizushima, Akira, 68163 Mannheim (DE)
(74) Representative: Reichert, Christian

(57) **Abstract**

A furrow depth detection system (200) determines whether a planter row unit (14) attains a set furrow (238) depth, and comprises: a vision system (214) comprising a laser unit (218) and an image capturing device (220) positioned downstream of a cutting disc (62) to capture a plurality of images of the furrow, each image including a representation of an illumination provided by a laser (222) emitted into the furrow that is indicative of a vision depth of the furrow; a memory (206) coupled with at least one processor (204) and including instructions that when executed by the processor cause the processor to: transform the plurality of images to provide for each image a point cloud representation comprising a plurality of data points corresponding to at least the illumination provided by the laser; identify from the plurality of data points a base data point corresponding to a lowest vertical data point observed by the vision system for the furrow; determine, using the base data point from each image, a representative base data point for determining an observed depth; and generate one or more signals to communicate, by a user interface (212), an indication of the observed depth.

## Description

The present disclosure generally relates to furrow cut depth estimations and, more specifically, to systems and methods for determining actual depths of furrows being cut by an agricultural machine in the presence of a variety of types of environmental disturbances.

### BACKGROUND

Agricultural planters, such as multi-row crop planters, are typically pulled by a tractor or other work vehicle and can plant seeds at a selected depth within a trench or furrow formed in the soil in a direction that is substantially parallel to the travel direction of the tractor when being pulled through a field. The depth at which seed is to be planted in the ground can be based on a variety of different criteria, including, for example, seed type and environmental conditions, such as soil composition, moisture levels, and weather predictions, among other considerations. Further, the selected depth at which seed is to be planted is often based, at least in part, on the premise that the planting of the seed via a planter row unit will occur in a direction in which the planter row unit is generally perpendicular to the adjacent ground surface. However, undulations in the ground surface along which planter row units travel can result in deviations in the actual depths and locations at which the planter row units plant seeds. Further, the structure of the furrow, in addition to depth, as well as the characteristics of the associated soil, including moisture content, can each impact the growth of the seeds planted therein and thus play a role in the associated crop yield.

### SUMMARY

The present disclosure can comprise one or more of the following features and combinations thereof.

In one implementation of the present disclosure, a furrow depth detection system is provided for determining whether a cut depth, as set for a planter row unit, for a furrow being attained by the planter row unit, the furrow depth detection system having a vision system comprising an image capturing device and a laser unit, the image capturing device positioned downstream of a cutting disc of the planter row unit and configured to capture a plurality of images of the furrow, each image of the plurality of images including a representation of an illumination provided by a laser emitted into the furrow by the laser unit that is indicative of a vision depth of the furrow. The furrow depth detection system can also include a user interface, at least one processor, and a memory coupled with the at least one processor. The memory can include instructions that when executed by the at least one processor can cause the at least one processor to: transform the plurality of images to provide, for each image of the plurality of images, a point cloud representation comprising a plurality of data points, the plurality of data points corresponding to at least the illumination provided by the laser; identify from the plurality of data points, from the point cloud representation for each image of the plurality of images, a base data point, the base data point corresponding to a lowest vertical data point observed by the vision system for the furrow; determine, using the base data point from the point cloud representation for each of the plurality of images, a representative base data point; determine, using the representative base data point, an observed depth; and generate one or more signals to communicate, by the user interface, an indication of the observed depth.

In another implementation of the present disclosure, a furrow depth detection system is provided for determining whether a cut depth, as set for a planter row unit, for a furrow is being attained by the planter row unit, the furrow depth detection system having a vision system comprising an image capturing device and a laser unit, the image capturing device positioned downstream of a cutting disc of the planter row unit and configured to capture a plurality of images of the furrow, each image of the plurality of images including a representation of an illumination provided by a laser emitted into the furrow by the laser unit that is indicative of a vision depth of the furrow. The furrow depth detection system can also include a user interface, at least one processor, and a memory coupled with the at least one processor. The memory can include instructions that when executed by the at least one processor can cause the at least one processor to: transform the plurality of images to provide, for each image of the plurality of images, a point cloud representation comprising a plurality of data points, the plurality of data points corresponding to the illumination provided by the laser; selectively partition each data point of the plurality of data points from the plurality of images into one image segment of a plurality of image segments, the plurality of image segments corresponding to at least different portions of the furrow, the data points for each image segment of the plurality of image segments providing a plurality of partitioned data segments for that image segment; aggregate the partitioned data segments for each of the plurality of image segments to construct an average image representative of the furrow; generate, using a set threshold, a binarized image of the average image representative of the profile of the furrow; identify, from the binarized image, a base data point corresponding to a lowest vertical data point observed for the furrow; determine, using the base data point, an observed depth; and generate one or more signals to communicate, by the user interface, an indication of the observed depth.

Additionally, in a further implementation of the present disclosure, a furrow depth detection system is provided for determining whether a cut depth, as set for a planter row unit, for a furrow is being attained by the planter row unit, the furrow depth detection system having a vision system comprising an image capturing device and a laser unit, the image capturing device positioned downstream of a cutting disc of the planter row unit and configured to capture a plurality of images of the furrow, each image of the plurality of images including a representation of an illumination provided by a laser emitted into the furrow by the laser unit that is indicative of a vision depth of the furrow. The furrow depth detection system can also include a user interface, at least one processor, and a memory coupled with the at least one processor. The memory can include instructions that when executed by the at least one processor can cause the at least one processor to: transform the plurality of images to provide, for each image of the plurality of images, a point cloud representation comprising a plurality of data points, the plurality of data points corresponding to the illumination provided by the laser; determine, from the point cloud representation of at least one image of the plurality of images, a number of data points located within a hot spot region corresponding to an area in which an intensity of the laser is elevated relative to the intensity of the later at other adjacent portions of the laser; determine a spatial distribution of the plurality of data points located within the hot spot region; and determine a reliability of (a) an information captured by at least one image and/or (b) a determination made using the information captured by the at least one image, based on whether the spatial distribution for the number of data points located within the hot spot region satisfies a separation threshold. These and other features of the present disclosure will become more apparent from the following description of the illustrative implementations.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements can be exaggerated relative to other elements for clarity. Further, where considered appropriate, reference labels have been repeated among the figures to indicate corresponding or analogous elements.
Figure 1 illustrates an exemplary agricultural machine in the form of an agricultural seeder and an agricultural vehicle.
Figure 2 illustrates an exemplary planter row unit that can be used with the agricultural seeder shown in Figure 1.
Figure 3 illustrates a simplified block diagram of an exemplary furrow depth detection system for determining an observed depth in forming furrows by the agricultural machine.
Figure 4 illustrates a side view of a portion of a vision system of the planter row unit capturing information regarding at least a furrow formed in the adjacent ground surface by the planter row unit.
Figure 5 illustrates a collection of raw data points of a point cloud determined from information captured in an image by the imaging capturing device, and which depicts, at a point in time, the profile of a portion of the furrow downstream of the cutting discs of the planter row unit.
Figure 6 illustrates an annotated representation of a point cloud image containing data points obtained from an image captured by the image capturing device with a general absence of interference by dust with a laser emitted from a laser unit of the vision system.
Figure 7 illustrates an annotated representation of a point cloud image similar to that shown in

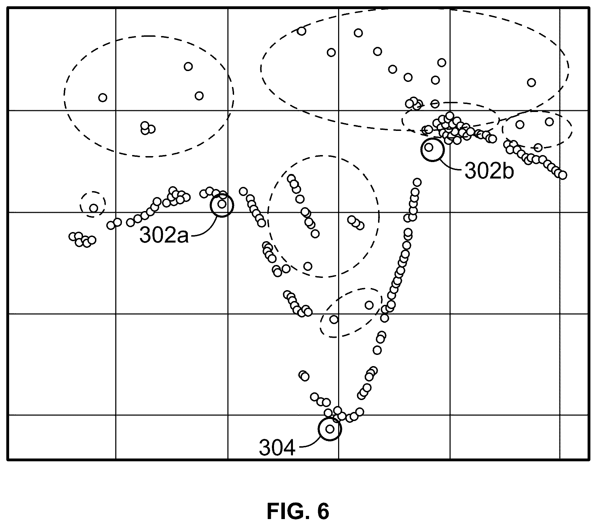

Figure 6 but in which a relatively large degree of interference is present from dust within the furrow that has resulted in laser scattering of the laser emitted from the laser unit.

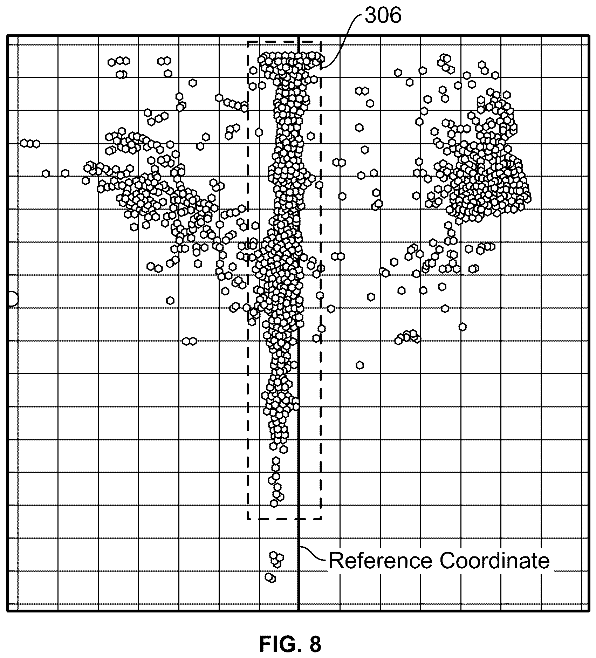

Figure 8 illustrates an annotated representation of a portion of a point cloud image plotted on a grid and created using data points obtained from an image captured by an image capturing device about a hot spot region of the laser.

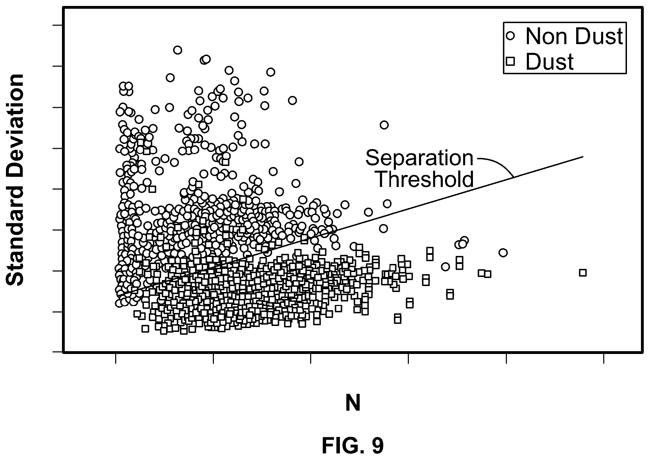

Figure 9 illustrates a two-dimensional chart depicting standard deviation values relating to a location of data points within a hot spot region as a function of the number of those data points in connection with dust index determinations.

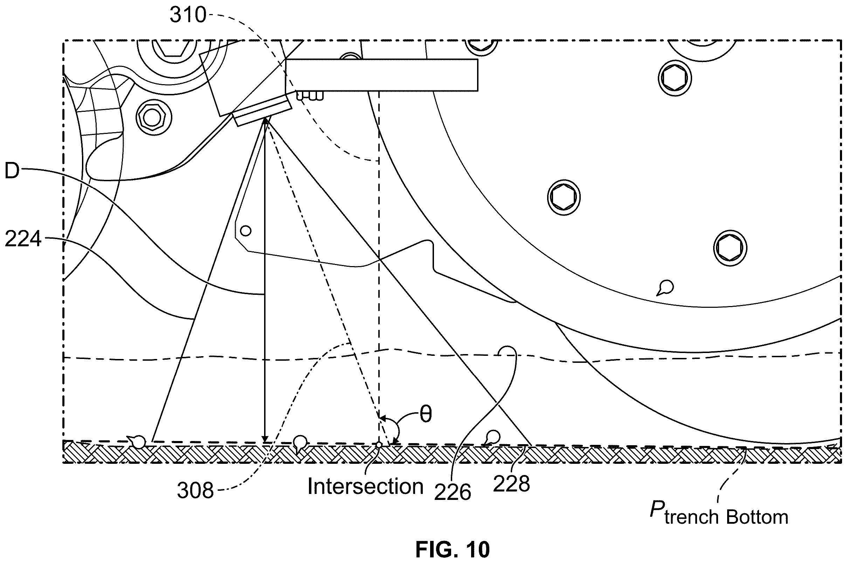

Figure 10 illustrates an approach for identifying, including verifying, the actual cut depth of the furrow by the planter row unit according to certain implementations.

Corresponding reference numerals are used to indicate corresponding parts throughout the several views.

### DETAILED DESCRIPTION

While the concepts of the present disclosure are susceptible to various modifications and alternative forms, specific implementations thereof have been shown by way of example in the drawings and will be described herein in detail. It should be understood, however, that there is no intention to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described can include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other implementations whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features can be shown in specific arrangements or orderings. However, it should be appreciated that such specific arrangements and orderings may not be required. Rather, in some implementations, such features can be arranged in a different manner or order than shown in the illustrative figures. Additionally, the inclusion of a structural or method feature in a particular figure is not meant to imply that such a feature is required in all implementations and, in some implementations, may not be included or may be combined with other features.

Optimally, a vision system associated with a planter row unit would measure the cutting depth of a furrow created by the planter row unit in the field at a location immediately following where the cutting discs of the planter row unit operate. However, with respect to at least certain types of row units, such positioning for the vision system is not available. Instead, the vision system can be positioned not only further downstream of the cutting discs but also behind the point where the planter row unit deposits seed in the furrow. In such situations, there exists a possibility that measurements obtained by the vision system relating to the depth of the furrow being cut by the planter row unit encompass various environmental disturbances, including, but not limited to, soil that has collapsed into the furrow and/or onto the seed. In such instances, the presence and detection by the vision system of such environmental disturbances can result in an inaccurate determination of the actual cut depth being attained by the operation of the cutting discs, and therefore an inaccurate determination of the depth of the furrow.

Accordingly, implementations of the subject application provide a furrow depth detection system for estimating depths of a furrow being cut by an agricultural machine that can account for the presence of different environmental disturbances. By accounting, or overcoming, the presence of such environmental disturbances, the furrow depth detection system can determine an observed depth that may more accurately represent the cut depth being attained by the operation of the planter row unit. Moreover, a comparison using such an observed depth can be used to determine if the actual cut depth, as set by the planter unit and/or at which the cutting discs of the planter row unit are set to cut the furrow, or is not, being attained. Accordingly, an accurate determination of the observed depth can assist in determining whether, or not corrective measures with respect to the depth at which the planter row unit is cutting the furrow are to be implemented, as well as an accurate indication of the extent such adjustments are to be made. Additionally, according to certain implementations, the information captured and/or determined by the furrow depth detection system can, in addition to providing an indication of the presence of an environmental disturbance, also be used for quantifying, or determining an amount, of an environmental disturbance (e.g., amount of soil collapse, residue, and/or dust, among others) that has accumulated within the furrow and/or has adversely impacted the quality of the furrow.

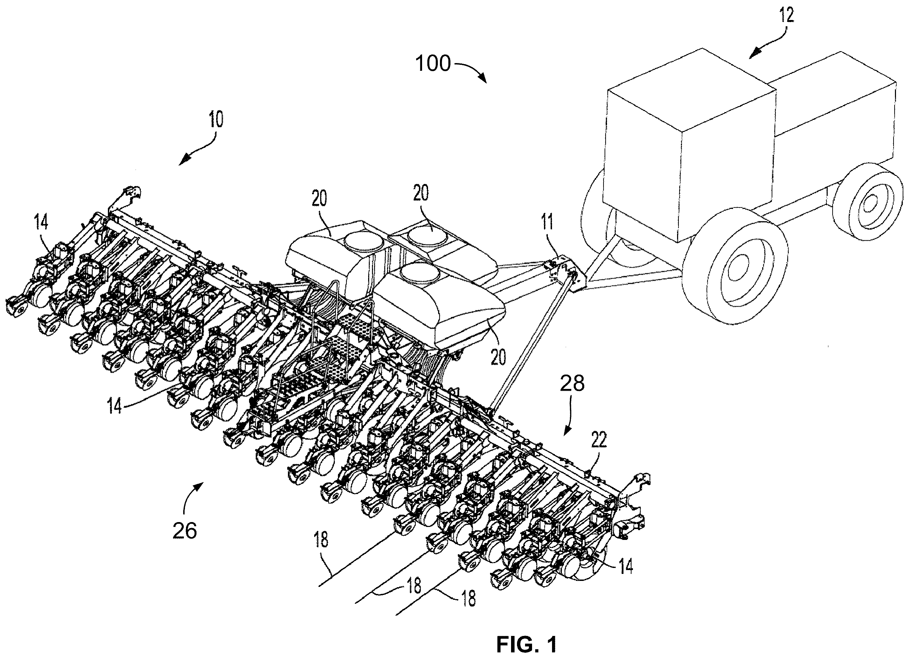

Figure 1 illustrates an exemplary agricultural machine 100 that includes an agricultural seeder 10 and a work vehicle, which, in this example, is a tractor 12. The depicted tractor 12 can be coupled with, and moves, the seeder 10 with a suitable coupling arrangement, such as a drawbar or 3-point hitch arrangement 11, among others. Other implementations, however, are contemplated, including an autonomous tractor pulling the seeder 10, as well as an entirely self-contained autonomous seeder in which the seeder, including the planter row units and a propulsion system for the seeder, are a complete and unitary seeding system.

According to the illustrated example, the depicted seeder 10 is a row crop planter that includes a plurality of planter row units 14. According to certain implementations, each planter row unit 14 can, or can not, be substantially identically configured. Each planter row unit 14 can be configured to deposit seeds of varying sizes in respective furrows 18, not all of which are illustrated, in the soil for raising crops. In some implementations, two or more of the planter row units 14 are configured to deposit seeds of different sizes and/or seeds for different crop types. Typically, however, the size of the seeds being deposited is the same for each planter row unit 14. In other implementations, seeds of different sizes can be deposited side by side in adjacent rows at different planting depths, which can depend on the size of the seed.

A plurality of seed bins 20 can be operatively connected to each of the planter row units 14 and are configured to hold seeds for planting. In other implementations, a single seed bin is used to supply seeds to all planter row units 14. In operation, each seed bin 20 can hold the same type of seeds or different types of seeds, which can be directed to each of the planter row units 14, as necessary. A tool bar 22 can extend and is coupled to each of the planter row units 14 to maintain a predetermined spacing between furrows 18. In some implementations, a rockshaft can be located over or above the tool bar 22. In some implementations, the spacing between planter row units 14 is adjustable to provide for crops of different types that require spacing between furrows 18 based on the type of seed.

While the exemplary seeder 10 shown in Figure 1 illustrates each of the planter row units 14 being in a side-by-side arrangement in which the planter row units 14 are generally in a parallel arrangement and/or at about the same distance from the tool bar 22, implementations discussed herein can accommodate a staggering in the alignment of adjacent planter row units 14. For example, according to certain implementations discussed below, a planter row unit 14 can be positioned further upstream of an adjacent or neighboring planter row unit 14. In some instances, such a staggered alignment can result in a planter row unit 14 being in closer proximity to the tool bar 22 than adjacent planter row units 14. Additionally, with respect to some implementations, such a staggered alignment can result in at least a portion of one planter row unit being on one side of the tool bar 22, such as, for example, an upstream or proximate side 28 of the tool bar 22, while an adjacent planter row unit 14 can be positioned on the other, or downstream or distal side 26 of the tool bar 22. Such a staggered alignment of planter row units 14 can be configured such that narrower portions of adjacent planter row units 14 are directly adjacent to each other, and/or wider portions of a planter row unit 14 are adjacent to a narrower portion of an adjacent planter row unit 14. By providing such a staggered alignment in which wider portions of adjacent planter row units are offset from each other in at least a direction of travel of the planter row units 14, adjacent planter row units 14 can be positioned in closer proximity with each other, thereby providing the capability to reduce the spacing between furrows 18 and accommodate the planting of seeds at locations that provide relatively narrow crop spacing.

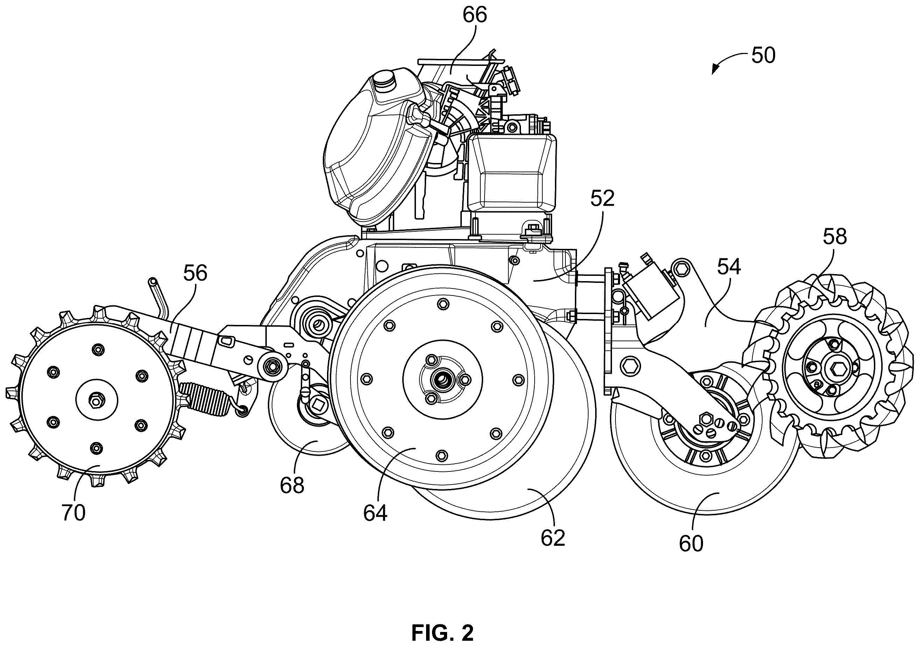

Figure 2 illustrates an exemplary planter row unit 50 that can, along with other types of planter row units 14, be utilized with implementations of the subject application. The illustrated planter row unit 50 includes a central frame 52 that is pivotally coupled to a front frame arm 54 and a rear frame arm 56. The front frame arm 54 in the illustrated exemplary planter row unit 50 can be coupled to a pair of row cleaners 58 and a coulter blade 60. The central frame 52 can be coupled to a cutting disc 62, also known as a blade, shank, knife, or a cutting device or member. The cutting disc 62 can extend inwardly into the ground at least until one or more gage wheels 64, also known as a depth-gaging or surface following device or member, engages the soil. According to the illustrated planter row unit 50, gage wheels 64 are positioned on opposing sides of the cutting disc 62. Additionally, with respect to at least certain types of planter row units, the relationship between the gage wheels 64 and the cutting disc 62 can be adjusted so as to at least assist in adjusting a depth to which the planter row unit 50 deposits seeds in the adjacent soil. According to certain implementations, seed that is received at or around a hopper 66 of the planter row unit 50 can travel through at least a portion of the planter row unit 50 before being deposited from the planter row unit 50 at or around a base of the cutting disc 62. The planter row unit 50 can include a press wheel 68 downstream of the location at which the planter row unit 50 is to deposit seed into the soil. Further, the rear frame arm 56 in the illustrated planter row unit is depicted as being coupled to a pair of closing wheels 70.

While for at least purposes of illustration specific implementations are discussed herein with respect to at least a seeder 10, planter row unit 50, and tractor 12, implementations of the subject application are applicable to a variety of other types of agricultural operations and the associated equipment, including, but not limited to, planters. Moreover, implementations discussed herein are applicable to agricultural machines, including, but not limited to, work vehicles (e.g., tractors), equipment, tools, and implements, as well as combinations thereof, collectively referred to herein as agricultural machines 100, that can be utilized for a variety of agricultural operations. For example, such agricultural machines 100, which can, or cannot, be self-propelled, can include, but are not limited to, planters, tillage equipment, sprayers, windrowers, harvesters, combines, tractors, and fertilizers, among others. Additionally, implementations discussed herein are also applicable to vehicles and equipment used for a variety of other tasks, including, but not limited to, construction and forestry, among others. However, for at least purposes of discussion, such other types of equipment will also be generally referred to herein as agricultural machines 100.

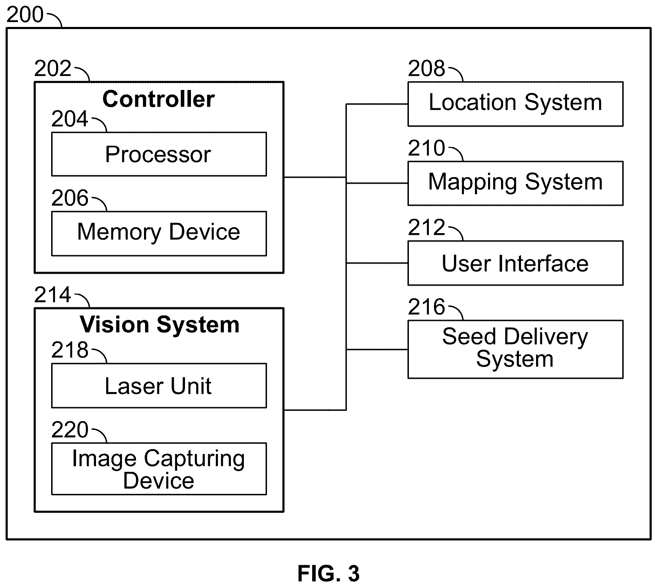

Figure 3 illustrates a simplified block diagram of an exemplary furrow depth detection system 200 for determining an observed depth in forming furrows by the agricultural machine 100. According to certain implementations, the furrow depth detection system 200, or a portion thereof, can be positioned on, or at, the agricultural machine 100, or distributed about different systems, devices, machines, or components. As illustrated, the furrow depth detection system 200 can include a controller(s) 202 having one or more processors 204 and one or more memory devices 206. The processors 204 can be configured to follow instructions, including control instructions contained with, or are part of, one or more of the memory devices 206, including, for example, a non-transitory machine-readable medium. Additionally, according to certain implementations, the controller 202 can include one or more graphics processing units (GPU).

The processors 204 can be embodied as any type of processor or other compute circuit capable of performing various tasks. In some implementations, each processor 204 can be embodied as a single or multi-core processor, a microcontroller, or other processing or controlling circuit. Additionally, in some implementations, each processor 204 can be embodied as, include, or be coupled to an FPGA, an application-specific integrated circuit (ASIC), reconfigurable hardware or hardware circuitry, or other specialized hardware to facilitate performance of the functions described herein. In some implementations still, each processor 204 can be embodied as a high-power processor, an accelerator co-processor, an FPGA, or a storage controller.

Each memory device 206 can be embodied as any type of volatile (e.g., dynamic random-access memory (DRAM), etc.) or non-volatile memory capable of storing data therein. Volatile memory can be embodied as a storage medium that requires power to maintain the state of data stored by the medium. Non-limiting examples of volatile memory can include various types of random-access memory (RAM), such as dynamic random-access memory (DRAM) or static random-access memory (SRAM). In some implementations, each memory device 206 can be embodied as a block addressable memory, such as those based on NAND or NOR technologies. Each memory device 206 can also include future-generation nonvolatile devices or other byte addressable write-in-place nonvolatile memory devices. Additionally, in some implementations, each memory device 206 can be embodied as, or otherwise include, a memory device that uses chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory-based device, a magnetic tunneling junction (MTJ) based device, a DW (Domain Wall) and SOT (Spin Orbit Transfer) based device, a thyristor-based memory device, or a combination of any of the above, or other memory. Each memory device 206 can refer to the device itself or to a packaged memory product. In some implementations still, 3D crosspoint memory can comprise a transistor-less stackable cross-point architecture in which memory cells sit at the intersection of word lines and bit lines and are individually addressable and in which bit storage is based on a change in bulk resistance. In some implementations yet still, all or a portion of each memory device 206 can be integrated into the processor(s) 204. Regardless, each memory device 206 can store various software and data used during operation such as task request data, kernel map data, telemetry data, applications, programs, libraries, and drivers. Thus, the memory devices 206 can include information, including, but not limited to, algorithms and look-up tables, among other information, that can be used by the processor 204, including with respect to information captured by the vision system 214, including with respect to determining, including estimating, the observed depth being attained by the operation of the cutting discs 62 of the planter row unit 50.

According to certain implementations, the controller 202, including the processor 204, can utilize one or more models or algorithms (collectively referred to herein as models), to identify information provided by the captured information obtained by a vision system 214. Such models can be stored in a variety of locations on the furrow depth detection system 200, including, for example, by the memory device 206, among other locations, or stored offboard, such as, for example, at a remote server or database, including a cloud-based database. Such models can be based on a variety of different information, including, for example, known sizes and/or reflectance characteristics of at least certain environmental disturbances, or items anticipated to be represented in information captured by the vision system 214.

The furrow depth detection system 200 can include a location system 208, that can provide various positional information relevant to the location of information obtained by the furrow depth detection system 200, as well as with respect to locations relating to other agricultural operations, including planted seed locations. According to certain implementations, the location system 208 can be a global positioning system (GPS) or other location determination devices that can generate data pertinent to the precise location of furrows, furrow depths (e.g., actual cut depth and observed depth), and/or seeds deposited by the planter row units 50. By incorporating the location system 208, the furrow depth detection system 200 can better correlate furrow depth measurements, including observed depth determinations made by the system 200, with geographic coordinates, allowing for enhanced tracking of field operations, as well as more precise agricultural planning and analysis. The furrow depth detection system 200 can further be configured to allow for the overlay of location, as identified using information provided by the location system 208 of determined furrow depth information onto digital field maps, as may be generated, for example, via use of a mapping system 210, to provide a comprehensive understanding of actual cut depth and observed depth variability across the agricultural field.

The furrow depth detection system 200 can also include, and/or the controller 202 can otherwise be communicatively coupled to, a seed delivery system 216 used in the dispensing or delivery of the seed from the planter row unit 50, including seed that had been in the seed bin 20, into the furrow. The seed delivery system 216 can include one or more sensors that can provide information regarding a seed as the seed is being released from the seed delivery system 216, and, moreover, from the planter row unit 50 and into the furrow. Such information regarding the release of the seed from the seed delivery system 216, including the timing of the release of the seed, can be used by the controller 202 to determine when the vision system 214 is to capture information, and/or the timing the controller 202 is to use information obtained by the vision system 214 in determining the observed depth.

The controller 202 can be electrically coupled to one or more user interfaces 212, including, for example, a user interface 212 in an operator cab of the tractor 12 or other vehicle or equipment. Additionally, or alternatively, the user interface 212 can be located at a remote location, such as, for example, an operations center, or be a mobile device, including, for example, a handheld mobile device. The user interface 212 can, according to certain implementations, include either or both an input device and an output device. A variety of different types of devices c an be utilized as the user interface 212, including, for example, a touch screen, display, keyboard, keypad, mouse, switch, joystick, or button, as well as any combinations thereof, among other types of user interfaces.

The furrow depth detection system 200 can also include the vision system 214, which can include, for example, a laser unit 218, such as, for example, a structured light unit (SLU), that projects a laser plane onto the furrow, and one or more image capturing devices 220. The image capturing devices 220 can be configured to capture the laser 222 emitted from the laser unit 218, including illumination provided by the laser 222. The laser 222 utilized by vision system 214 can assist in projecting a structured light pattern to generate a trapezoidal trench profile. As discussed below, the vision system 214 can capture deviations in the profile of the furrow by utilizing information captured by the vision system 214, including in connection with the projection of the laser into/onto the furrow, to generate a point cloud representation of the captured information. The laser 222 projected by the laser unit 218 can be oriented to be generally perpendicular to the ground so as to at least assist with enabling the detection of irregularities of the furrow and/or ensuring precise measurement, or determination, of the observed depth of the furrow 238. As discussed below, the captured information can be processed by the furrow depth detection system 200 to determine the trench bottom position, allowing the system 200 to compute the observed depth by the planter row unit 50 even in the presence of environmental disturbances, including, but not limited to, soil or furrow collapse onto at least a portion of the bottom of the furrow.

The image capturing devices 220 of the vision system 214 can be configured to capture a series of images, including image frames or video frames, of the furrow formed by the planter row unit 50. The information captured by the image capturing device 220 can include representations of the laser 222 and/or areas/items illuminated by the laser 222 or associated laser scatter, as seen by the image capturing device 220. The image capturing devices 220, can include, for example, one or more stereo depth cameras, stereo sensors, RGBD (red, green, blue, depth) cameras, three-dimensional sensors, LIDAR, radar, two-dimensional cameras, and/or three-dimensional cameras, among other sensors. Further, the orientation and functionality of the image capturing device(s) 220 can enable, using information captured by the image capturing device 220, effective furrow profiling and depth estimation under various operational conditions. According to certain implementations, the information captured by the one or more image capturing devices 220, including, for example, images, can be processed to generate a point cloud that can assist the furrow depth detection system 200 with determining the bottom position of the furrow at a variety of locations along the furrow.

A variety of techniques can be utilized to transform or convert information provided by the images captured by the image capturing device 220 to point cloud data. For example, with respect to two-dimensional information captured by an image capturing device 220 that is an (RGB) camera, the RGB image, as captured as a two-dimensional array of pixels, can be analyzed, including to extract information and determine two-dimensional characteristics for assigning information from the images in spatial coordinates in a manner that can form the basis of a point cloud. Moreover, pixels in the RGB image can receive spatial coordinates that can allow the pixels, and corresponding information, to be plotted in two-dimensional space, such as, for example, X and Y coordinates. Such spatial points can be represented as information points in the point cloud, each consisting of attributes such as color and/or brightness, as derived from RGB values and spatial positioning. The aggregation of these points can accurately depict, for example, the surface geometry, including profile and/or relative location information, for either or both the furrow 238 and/or an environmental disturbance(s) 236 seen by the image capturing device 220, thereby enabling further analysis and processing by the system 200, including the controller 202, via techniques that utilize point cloud information.

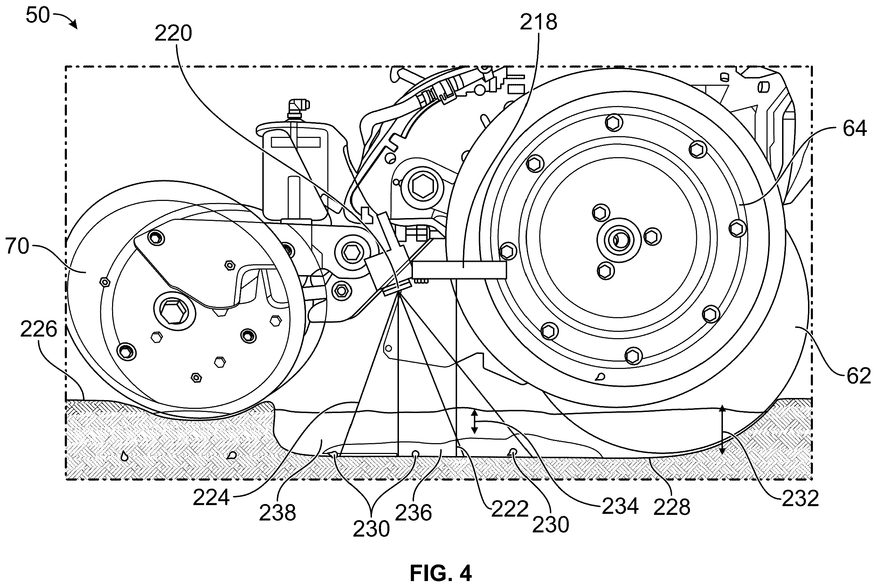

Referencing Figure 4, the furrow depth detection system 200 seeks to use information captured by at least the vision system 214 for a precise determination of the observed furrow depth. Moreover,

Figure 4 illustrates a planter row unit 14 in the process of forming and analyzing a furrow 238 for planting seeds 230. As seen, as the cutting disc 62 of the planter row unit 50 is cutting the furrow 238, the cutting disc 62 is attaining an actual cut depth 232 at the front of the furrow 238. Moreover, the actual cut depth 232 can correspond to a distance between a ground top surface 226, such as a shoulder of the furrow 238, and a theoretical or clean bottom of the furrow 238, which can correspond to the bottom of the furrow 238 in the absence of any environmental disturbances 236, including soil or trench collapse, on top of the bottom of the furrow 238. Further, in at least certain instances, the theoretical or clean bottom of the furrow 238 can be the location, including depth, at which the seeds 230 are, or are intended, to be placed within the furrow 238.

As also seen in Figure 4, the image capturing device 220 can be positioned downstream of the cutting discs 62 such that the field of view 224 of the image capturing device 220 captures a portion of the furrow 238 previously formed by the cutting discs 62, and which may have already received a planted seed(s) 230. However, as also seen in Figure 4, the field of view 224 of the downstream image capturing device 220 may capture a portion of the furrow 238 that has, since passage of the cutting disc 62 through that portion of the furrow 238, been subjected to, including the recipient of, one or more types of environmental disturbances (e.g., soil or trench collapse, debris, etc.). In such situations, rather than capturing the bottom of the furrow 238, the information captured by the image capturing device 220, including images, may instead depict at least a top or upper portion of the environmental disturbance 236 that may be covering at least a portion of the furrow bottom 228. Thus, for example, the information captured by the image capturing device 220 can provide, or be used to determine, a vision depth 234 corresponding to a depth between the adjacent ground top surface 226, such as a top of a shoulder of the furrow 238, and the upper or top location of the environmental disturbance 236 onto which the laser 222 from the laser unit 218 is captured in the image obtained by the image capturing device 220. Accordingly, use of such captured information by the furrow depth detection system 200 would result in the determination of a calculated or computed cut depth that, due to the presence of the environmental disturbance 236 in the furrow 238, would not accurately correspond to the actual cut depth 232 being attained by the cutting discs 62 of the planter row unit 50. Conversely, in at least theoretical conditions in which the furrow 238 is clean and, moreover, in the absence of collapsed soil that at least partially fills the furrow 238, the vision depth 234 would correspond to the observed depth, and may more accurately correspond to the actual cut depth 232.

To address such errors or inconsistencies between the actual cut depth 232 and the calculated or computed observed depth attained from information captured by the vision system 214, certain implementations of the subject disclosure allow the furrow depth detection system 200 to be configured to identify the location of the bottom of the furrow 238 using information from a relatively large number of images, including frames, captured by the image capturing device 220. The use of such identified images can result in determinations, including estimations, of the observed depth by the system 200 regarding the vertical location of the furrow bottom 228 of the furrow 238 using information captured by the vision system 214 that may more likely accurately represent the actual cut depth 232 to which the cutting discs 62 of the planter row unit 50 are actually cutting into the ground, and whether (and to the extent), based on such a comparison, the setting(s) for actual cut depth 232 of the planter row unit 50 is/are to be adjusted.

At least certain types of planter row units 50 are configured such that the distance between the image capturing device 220 and the theoretical or clean furrow bottom 228 remains the same, or is fixed, regardless of the cut settings of the planter row unit 50. Thus, for example, while the settings of such planter row units 50 can be adjusted to vary the vertical depth the cutting discs 62 cut into the ground, such adjustments also result in a corresponding change in the positioning of the image capturing device 220 such that the distance between the bottom of the clean furrow 238 and the image capturing device 220 remains the same. In such situations, however, the distance between the shoulders of the furrow 238 formed by the cutting of the furrow 238 can change. Therefore, with respect to such planter row units 50, a determination of the actual cutting depth using information captured by the vision system 214 can be based on a determined depth from at least one shoulder of the furrow 238 and the bottom of the furrow 238.

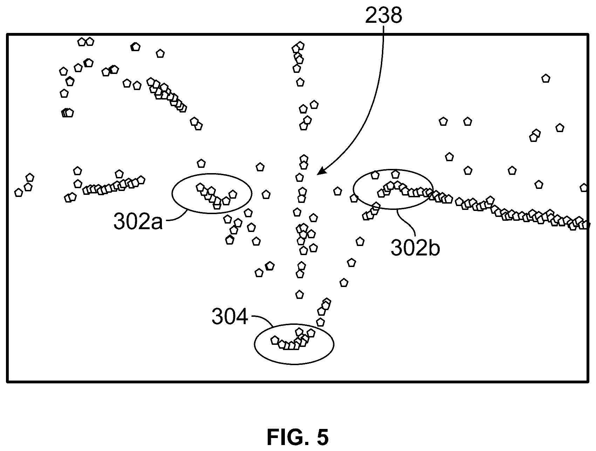

Figure 5 illustrates a collection of raw data points of a point cloud determined from information captured in an image by the imaging capturing device 220, and which depicts, at a point in time, the profile of a portion of the furrow downstream of a cutting discs 62 of a planter row unit 50. According to certain implementations, the data points seen in the point cloud can correspond to areas in which the image capturing device 220 captured information from within the furrow 238 showing, or seeing, the laser 222 and/or associated illumination. As depicted in the Figure 5, the image obtained by the image capturing device 220 can include a collection of first and second shoulder data points 302a, 302b corresponding to areas of the furrow 238 that the controller 202 can determine are the upper left and right shoulders of the furrow 238, respectively. The shoulders of the furrow 238 are generally located at the opposing top ends of the furrow 238. The controller 202 can also identify a plurality of base data points 304 as corresponding to the base or bottom of the furrow 238. However, as previously discussed, in at least certain instances, the base data points 304 can correspond to the top, or upper portion of the environmental disturbance 236 that may be covering, or on top of, the furrow bottom 228 of the furrow 238 that would otherwise, at least theoretically, be seen in the absence of the presence of the environmental disturbance 236 as cut by the cutting discs 62.

With respect to at least certain implementations, in connection with at least attempting to identify the observed depth using information captured by the image capturing device 220, the controller 202 can determine which of the two shoulders of the furrow 238, as represented by the data points in the point cloud representation, is to be used as a reference shoulder for determining at least the depth of the furrow 238 depicted in a captured image. A variety of manners can be used to determine, including set, establish, or dynamically select, the shoulder of the furrow 238 that is to be selected for the reference shoulder. For example, according to certain implementations, differences in the number or amount of first and second shoulder data points 302a, 302b provided by the image, corresponding to an area anticipated to be at or around the associated shoulder and/or that forms or provides an indication of the profile or location of the associated shoulder, can be a factor in selecting the reference shoulder. For instance, in the example shown in Figure 5, the depicted image may contain more second shoulder data points 302b, or more second shoulder data points 302b at or around an anticipated location for the second, right shoulder than the corresponding first shoulder data points 302a for the first, left shoulder. In view of at least, in this example, such differences in the number and/or concentration of data points 302a, 302b, the controller 202 may identify the second, right shoulder as being the reference shoulder that is to be used in determining at least the vision depth 234.

The controller 202 can further analyze at least the base data points 304, if not all of the data points, to identify at least one base data point 304 located, vertically, at the lowest location in the point cloud data. Moreover, the controller 202 can identify, from the information obtained from a particular, or single, image captured by the image capturing device 220, the data point(s) having the vertically lowest location that may correspond to the lowest identified point in the furrow 238. With the lowest data point, also referred to herein as the base data point, identified, the controller 202 can determine, for that particular image or information, at least the associated depth, such as the vertical distance between the vertical position of the identified reference shoulder and the identified base data point.

While the above example is discussed with respect to a single image and the information derived from the particular image, as illustrated in Figure 5, the above-mentioned process for at least identifying the reference shoulder and/or base data point can be performed for each of a plurality of different images, which may, or may not, be obtained consecutively. Alternatively, the images utilized by such an approach may be filtered such that images that may be less reliable, or of lower quality, may be disregarded. For example, according to certain implementations, the controller 200 can be configured to disregard images that do not satisfy a predetermined dust index (discussed below), exhibit interference from ambient light, and/or based on a determined quality of the profile of the furrow.

The number of images, and/or the corresponding time period covered by those images, can also be configurable, including selectable or predetermined, numbers or values. For example, if depth information is to be determined for each of a plurality of consecutive images obtained by the image capturing device 220, and the image capturing device 220 is known to capture about forty images per second, the furrow depth detection system 200 can be configured to analyze a predetermined number of images, such as, for example, 1000 images, and/or each of the images obtained over a period of time, such as, for example, a twenty-five second time period, which, in this example in which forty images per second are captured, would also correspond to around 1000 images. In such an example, the furrow depth detection system 200 can determine, for each of the 1000 images, the base data point shown in the image. According to certain implementations, the controller 202 can then use information from each of the 1000 images to determine one or more of a representative base data point, a representative reference shoulder position, and/or a representative observed depth, as well as any combination thereof. According to certain implementations, such representative information can correspond to a central tendency of the corresponding data, including, for example, be average or median values. As the representative value(s) can be attained by approaches that can involve a relatively large number of images, or corresponding data points, the representative value(s) may be less likely to be adversely impacted by the presence of environmental disturbance 236. Accordingly, for example, a representative base data point, and an associated calculated or computed estimation of the observed depth, determined using such an approach based, at least in part, on information captured by the vision system 214, may more accurately represent the actual cut depth 232 being attained by the operation of the cutting disc 62.

According to another implementation, the furrow depth detection system 200, including the controller 202, can be configured to use image segmentation to determine the observed depth. For example, a configurable number of images, including, for example, a selectable, predetermined, and/or dynamically adjustable number of images, captured using the vision system 214 and/or captured over a configuration amount of time, can be collected using the vision system 214 to provide a collection of images for image segmentation. For example, according to certain implementations in which the image capturing device 220 captures images at a rate of forty frames per second, the collection of images, referred to herein a segmentation images, can predetermined to be about 2000 consecutive images that are collected over a preselected fifty-second time period.

However, according to certain implementations, rather than being consecutive images, the segmentation images can be a collection of consecutive images collected via operation of the image capturing device 220 or a collection of images that satisfy one or more thresholds or filters, as well as any combination of thresholds. Such thresholds can be configured to discard or ignore at least certain images, including, for example, based on the quality of the image or data points in the image. For example, the controller 202 can be configured to not include within the segmentation images that can exhibit certain predetermined features indicative of interference in the image due to the presence of sunlight or dust. For example, according to certain implementations, the segmentation images may not include images having a particular dust index, as discussed below. Additionally, according to certain implementations, the base data point determined for a particular image can need to satisfy a predetermined threshold, such as, for example, correspond to a minimum depth, in order for the image to qualify to be included with the segmentation images.

In certain implementations, the furrow depth detection system 200 can use image segmentation techniques to process data in the segmentation images. Such image segmentation techniques can involve labeling or identifying different data points or pixels in the segmentation images and partitioning those different data points into distinct image segments or regions. The segmentation process can include the segmentation images undergoing segmentation by the furrow depth detection system 200 and/or controller 202 to isolate specific areas of interest, such as the furrow profile, by differentiating areas corresponding to the ground top surface 226, the furrow bottom 228, furrow shoulders, and/or environmental disturbances 236, if present. The segmentation can also enable the analysis of segmented data points through the identification of patterns or regions that may represent, in the segmentation images, a clean furrow 238 cut by the cutting disc 62, even in the presence of at least some environmental disturbances 236.

Subsequently, the furrow depth detection system 200, using the processor 204 of the controller 202, can aggregate the segmented information from each segmentation image to construct an average image. This average image can be developed by overlaying segmented details from multiple individual segmentation images, thereby reducing the influence of transient, environmental disturbances 236, such as soil collapse or dust. The average image can thus represent a synthesized view of the furrow profile with enhanced clarity and accuracy in determining, including estimating, for at least information captured by the vision system 214, the observed depth, which can ultimately facilitate a more reliable furrow depth estimation in varying environmental conditions.

The average image, developed by overlaying segmented details from multiple individual images, can then undergo binarization by the furrow depth detection system 200 and/or controller 202 using a set threshold. Such a binarization process can involve converting the average image into a binary format, where pixels can be classified based on whether the brightness intensity values for the pixel data in the average image exceeds, or otherwise does not satisfy, the predetermined threshold. The binarized image can assist in isolating the furrow profile and enhancing the accuracy of identifying, from captured information, the observed depth, particularly by highlighting discontinuities or deviations in the furrow profile that can indicate the presence of environmental disturbances 236, such as soil collapse. According to certain implementations, the furrow depth detection system 200 can analyze the contrast variations, including intensity values that exceed the predefined threshold, to detect continuity and define the profile of the trench bottom.

The binary image can then be used to identify the lowest vertical position, or base data point, in the binary image that can correspond to the location of the clean furrow bottom 228. Such a process of locating the base data point within the binarized image can, according to certain implementations, involve systematically searching for the data point in the binary image that represents the lowest vertical position within the identified furrow profile.

Throughout the image segmentation process, the identified base data point, also referred to as the lowest y-value within the binarized image, can be considered a representative candidate for the observed depth of the furrow 238. This approach can allow for a more precise and consistent depth determination by reducing inaccuracies that can be caused by environmental disturbances 236, by, for example, effectively isolating furrow profile determinations from such disturbances. Further, the base data point can be selected not only based on its position but also on the accumulation of comparative analysis across multiple images, which can provide a robust estimate even when the furrow is, potentially, subjected to one or more types of environmental disturbances 236.

Additionally, or alternatively, according to other implementations, the furrow depth detection system 200 can be configured to determine, including estimate, the observed depth using a statistical analysis approach, including, for example, via use minimum point estimation. The minimum point estimation technique can be employed for determining, using at least the information captured by the image capturing device 220, a base data point from a range of captured data points that represents the vertically lowest identified point of the furrow 238, and which therefore can be used to determine, including estimate, the observed depth. Such an approach can involve collecting and analyzing a series of images obtained by the vision system 214, and, moreover, the image capturing device 220, that have a base data point that is within a predetermined range of values. Further, the predetermined range of values can be adjusted, or refined, in response to the furrow depth detection system 200 collecting additional information and/or in response to other, or a historical, of depth determinations made by the furrow depth detection system 200 and/or controller 202 using such an approach.

Using minimum point estimation, the identified base data points determined for each image can be further analyzed to determine a median point, or the median base point data, that can represent a middle value when the base data points from the analyzed images are organized in a sequential order. This the median base point data can then be used as an estimate for the observed depth, thereby reducing the impact of outliers or anomalies, in terms of the base point data determined from other images, that may have been adversely impacted by transient environmental disturbances 238, including, for example, soil collapse and dust interferences, among other types of environmental disturbances 238. Moreover, by calculating a median base data point from a range of base data points across the collected images, implementation of the minimum point estimation technique can at least assist with achieving higher accuracy and reliability in estimating the associated observed depth, considering potential variability in environmental conditions. The identification of a median base data point through the minimum point estimation technique can further enhance the precision of determining the profile of the furrow 238, particularly by selecting consistent and robust reference base data points amidst varied environmental conditions.

Aside from using information obtained by the vision system 214 to determine, including estimate, the observed depth, at least some of the information provided by the vision system 214 can also indicate, or be used to determine the vision depth 234. For example, while above-techniques have been discussed to identify the vertical location of the furrow bottom 228, and thus seek to attain a observed depth that may more accurately represent the actual cut depth 232 despite the potential presence of one or more environmental disturbances 236, similar approaches can be utilized to identify vertically high points, also referred to as high data points, in the furrow 238 that can correspond to the upper, or top, portion of environmental disturbance 236 present in the furrow 238, and which be part of the vision depth 234. The use of such high data points may not only help with a binary type determination of whether there is, or is not, debris in the furrow 238, but also assist in determining the extent, including amount, of the environmental disturbance 236 in the furrow 238. For example, the vision depth 234, or a difference between the high data point and the observed depth, as determined using one of the techniques discussed herein from information obtained by the vision system 214, can indicate the quantity of soil present in the furrow 238. Such determinations can be further correlated, for example, to the extent the furrow is, or is not, experiencing soil or furrow collapse, the degree or amount of such furrow or soil collapse, and/or the quality of the profile of the furrow 238. Such information can be used in a variety of manners, including, with respect to adjusting one or more of the settings of the planter row unit 50, including the relationship between the gage wheels 64 and the cutting disc 62 and/or downward force settings, among other, as discussed herein, including with respect to at least Figure 2.

To address issues relating to dust potentially interfering with information captured by the vision system 214, which can adversely impact the reliability or accuracy of determinations by the system 200, including the accuracy of the determined observed depth, the furrow depth detection system 200 can determine for images captured by the vision system 214, including by the image capturing device 220, a dust index. Moreover, laser scatter caused by dust scattering the laser 222 within the furrow 238 can result in heightened concentration of data points, primarily in a defined region where the intensity of the laser 222 can be the greatest, as can be seen, for example, by a distribution of point cloud information derived from the captured image(s). This scattering effect can allow for a quantification (e.g., a dust index) by the furrow depth detection system 200 of ambient dust levels through an analysis of the concentration and standard deviation of the location of data points captured in the field of view 224 of the image capturing device 220. As discussed below, the furrow depth detection system 200 can also apply to the analysis of the data point information, a separation threshold as a manner of at least distinguishing between dusty and non-dusty conditions, or varying degrees of dusty conditions, based on gathered data. This distinction can aid in the ability of the furrow depth detection system 200 to generate a confidence value indicating the likelihood of dust interference with information captured and/or analyzed by the system 200, which can be displayed to the user via the user interface 212. Such information can enable the user to make an informed decision about operational adjustments of at least the planter row unit 50. For example, information regarding the reliability, or potential inaccuracy, of the information outputted by the system 200 in view of associated dust levels can raise operator concerns regarding whether to rely on such information as a basis for modifying downforce settings of the planter row unit 50, among other settings, to adjust the actual cut depth 232 of the cutting discs 62 in at least an attempt to maintain optimal planting performance by the planter row unit 50.

Figure 6 illustrates an annotated representation of a point cloud image containing data points obtained from an image captured by an image capturing device 220 with a general absence of interference by dust with a laser emitted from a laser unit 218. In the depicted example, annotations in the form of generally circular and oblong shapes depicted in broken line format encircling data points, referred to as dust data points, correspond to laser scatter among dust particles, as detected from the information captured by the image capturing device 220. Further, in this example, other data points, referred to as profile data points, not encircled within the annotated broken line regions can generally correspond to the profile or structure of the furrow 238.

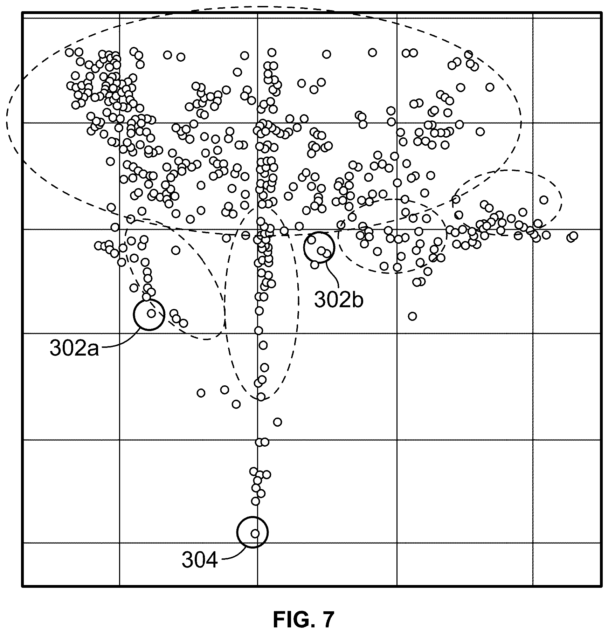

Figure 7 illustrates another annotated representation of a point cloud image similar to that shown in Figure 6 but in which a relatively large degree of interference from dust within the furrow 238 has resulted in scattering of the laser 222 emitted from the laser unit. As seen, compared to Figure 6, there are a larger number of dust data points within the annotated broken line regions that, again, correspond to laser scatter among dust particles. Thus, given the larger number of dust data points, the information captured in Figure 7 depicts a dustier situation than seen in Figure 6, and, moreover, a situation in which the presence of dust can have a greater potential for interfering with information captured by the image capturing device 220 and/or determinations made by the furrow depth detection system 200, including the controller 202, using such information.

In certain implementations, the furrow depth detection system 200 can determine a dust index that can correspond to one or more mathematical relationships relating to the number of dust and/or profile data points and the overall number of data points. For example, the dust index can be a value derived from the number of profile data points, cubed, divided by the total number of data points (e.g., dust data points + profile data points). According to such implementations, the derived dust index can be used with one or more tables, loop up charts, and/or algorithms, including models, to generate a confidence value indicating the likelihood of dust interference with the data captured by the image capturing device 220 and/or used in associated determinations made by the system 200, including with respect to estimating the observed depth. In certain instances, such a dust index can indicate the data captured by the image capturing device 220, or used in determinations by the furrow depth detection system 200, is to have little or no value, or is to be ignored, or conversely, can be considered reliable.

Figure 8 illustrates an annotated representation of a portion of a point cloud image, positioned about a hot spot region 306, plotted on a grid and created using at least some data points obtained from an image captured by an image capturing device 220. The depicted grid can correspond to a two-dimensional coordinate system (e.g., x-y coordinate system), with the lines of the grid being shown, for example, in 5 millimeter (mm) increments, among other increment values. The hot spot region 306 can be defined by a higher intensity area of the laser 222 that is emitted from the laser unit 218. Such a region can correspond to a physical property of the laser 222 in which the laser 222 produces a hot spot effect in which the intensity of the laser 222 is elevated. The elevated intensity of the laser 222 at the hot spot region 306 can, due to the higher laser intensity, result in the laser scatter being more pronounced near the center of the laser 222 in the hot spot region 306. For at least purposes of discussion, the hot spot region 306 is generally identified in Figure 8 by a generally annotated rectangular box depicted in broken lines.

When a relatively substantial amount of dust is present in the furrow 238, due to the elevated intensity of the laser 222 in the hot spot region 306, a generally vertical line from a collection of data points (e.g., dust data points), can appear in the image captured by the image capturing device 220. Such an appearance of the dust data points within the hot spot region 306 can be the result of increased laser scattering in the hot spot region 306, which can arise, at least in part, due to the increased laser scattering associated with the higher level of laser intensity. However, the detectability of such laser scattering in the hot spot region 306 from the image captured by the image capturing device 220 can be at least partially contingent on the presence or concentration of adjacent dust particles.

The size of the hot spot region 306 can generally remain constant due, at least partially, to the physical attributes of the laser 222. However, the location of the hot spot region 306 and, moreover, the location of the hot spot region 306 between the laser unit 218 and the ground surface in the furrow 238 towards which the laser unit 218 projects the laser 222 can dynamically change. Accordingly, in determining where to position the hotspot area 306 within a coordinate system, such as a two-dimensional coordinate system associated with the point cloud data, the furrow depth detection system 200, including the controller 202, can utilize information captured by the image capturing device 220 to perform scans in two directions (e.g., horizontal and vertical scans) to identify an accumulated concentration of data points in the two-dimensional coordinate system. The detection of the location of the accumulated concentration of data points (e.g., dust data points) can be used by the furrow depth detection system 200, including the controller 202, to determine the corresponding location of the hot spot region 306. Accordingly, the location of the hot spot region 306 can be dynamically adjusted by furrow depth detection system 200 based on identified changes in the location of the concentration of data points (e.g., dust data points). Additionally, once the location of the hot spot region 306 is identified, the number of data points (e.g., dust data points) within the hot spot region 306 can then be counted to derive a value for the number (N) of dust data points within the hot spot region 306.

In further assessing the level of dust in the image(s) captured by the image capturing device 220, the by furrow depth detection system 200 can also be configured to determine a spatial distribution for the determined number (N) of dust data points within the hot spot region 306. A determination of the spatial distribution can assist in determining either or both the concentration and dispersion of the data points within the hot spot region 306, which can further assist in identifying the extent dust is, or is not, present in the furrow 238.

The spatial distribution can be determined in a variety of manners, including, for example, through standard deviation calculations based on two-dimensional location information for each data point within the hot spot region 306. For instance, the furrow depth detection system 200 can use a standard deviation determination to identify the data point distribution within the hot spot region 306. For example, when higher dust levels are present in the captured image obtained by the image capturing device 220, or from the corresponding point cloud information, a higher concentration of the data points within the hot spot region 306 can be generally located around a central location within the hot spot region 306. This generally central concentration of data points can correspond to relatively lower distances between the data points and the central location. Consequently, the relatively large number of data points in close proximity to (low distance from) such a central location can result in a relatively low standard deviation value. Accordingly, such an evaluation of information captured by the image capturing device 220, including point cloud information, that results in a lower standard deviation value can suggest the occurrence of a denser clustering of data points, which can thereby be correlated to higher dust levels and a potential for increased dust interference with images and related information obtained by image capturing device 220. Further, such standard deviation values, and the associated levels of potential dust interference, can lower the reliability, and thus an associated confidence level, of the corresponding information captured by the image capturing device 220.

In contrast, in images, or associated point cloud information, with reduced dust levels, the distribution of the data points within the hot spot region 306 can be more dispersed or exhibit a broader distribution, thereby lacking a central concentration typically associated with increased dust levels. Consequently, a larger number or portion of the data points can have greater distances from any identified central location(s) within the hot spot region 306, which can result in a higher standard deviation value. A higher standard deviation score can thus be associated with lower dust situations and reflect a wider variance in the location of the data points within the hot spot region 306 due to lower levels of laser scattering. Therefore, the higher standard deviation score can indicate a relative low dust, or non-dusty conditions and thus reduced dust interference with captured information. Moreover, such higher standard deviation scores can be used as an indicator of a high degree of reliability, or associated higher confidence level, of the corresponding information captured by the image capturing device 220.

The furrow depth detection system 200 can utilize the calculated standard deviation score, as a function of the associated number (N) of identified data points within the hot spot region 306, to differentiate between conditions with varying levels of dust interference. For example, as seen by Figure 9, a separation threshold can be derived that distinguishes dusty environments from clearer non dusty or less dusty environments. Moreover, Figure 9 illustrates a graph plotting standard deviation (y-axis) derived from the identified number (N) of data points as a function of the number (N) (x-axis) of identified data points within the hot spot region 306. For such a function, the separation threshold is inserted as a line along a location at which the higher standard deviation values vertically above the separation threshold correspond to images captured by image capturing device 220 in low dust or non-dust conditions, while the standard deviation values below the separation threshold correspond to images captured by the image capturing device 220 in high dust situations.

The separation threshold can be derived as a part of the dust index assessment process by employing one or more of empirical testing, historical results analysis, and/or machine learning techniques, as well as various combinations thereof, among other approaches. At least initially, through empirical testing of baseline environment conditions, both dusty and non-dusty, data can be generated for the determination of the separation threshold that can capture standard deviation values across varying dust levels and for a variety of different numbers (N) of data points. Such testing can assist in establishing foundational thresholds that can delineate between clear, or generally clear conditions, from dusty conditions. Upon accumulating sufficient experimental data, historical results can be incorporated to fine-tune the separation threshold. Historical data can include, for example, past readings and measurements from similar agricultural operations under known conditions, taking into account variables such as soil composition, environmental disturbances, and prior machine calibrations. Such historical insights can facilitate more precise adjustments to, or fine tuning of, the initially established baselines for the separation threshold. Machine learning algorithms can also further enhance this baseline by modeling complex relationships within the collected data. Such algorithms or models can process both empirical and historical data to discern patterns and refine the separation threshold with higher efficacy. The resulting model-driven separation threshold could therefore account for variances not only in dust concentration, but also in contextual changes such as ambient conditions and machine operation. While Figure 9 illustrates a single separation threshold, the separation threshold can be represented as a plurality of different separation thresholds that each correspond to different levels of potential dust interference, and therefore varying degrees of reliability for the corresponding information captured by the image capturing device 220. In such an implementation, each separation threshold can be determined by analyzing the spatial distribution, including concentration, of data points within the hot spot region 306, as with respect to hot spot regions 306 for the point cloud data depicted in Figures 6, 7, and 8. These different separation thresholds can be utilized to classify the captured images into categories based on the reliability of the information contained therein, correlating to the degree of dust interference present in the scene.

The plurality of separation thresholds can delineate levels ranging from high confidence in the image data to low confidence, influencing operational adjustments, such as, for example, with respect to the settings of the planter row unit 50, and system alerts. For instance, a lower separation threshold might be set to distinguish images with negligible dust interference, thus indicating their high reliability. Images meeting this criterion can be given a high confidence value, signaling to the user that depth measurements derived from these images are likely to be accurate. Conversely, a higher separation threshold can identify images suffering from significant dust interference, which can suggest a degradation in reliability. Information captured in such conditions may be flagged with a lower confidence value, prompting the system or operator to at least temporarily disregard or minimally rely on determinations being made by the system 200, including with respect to determinations relating to the observed depth. Intermediate separation thresholds can be used to classify images with moderate levels of dust interference. These thresholds can provide a gradient or spectrum of reliability assessments, wherein varying degrees of dust impact are quantified and mapped to corresponding confidence levels. Such differentiation can enable an adaptive response within the system, allowing for dynamic adjustments based on real-time environmental conditions, thereby enhancing the accuracy of the depth determinations by the furrow depth detection system 200.

The dust index determinations or associated confidence values can be presented to the operator through the user interface 212. For example, the user interface 212 can be configured to display graphical icons, such as a dust icon(s), which visually indicate the probability or level of dust interference with the information being used by the furrow depth detection system 200 in connection with depth determinations. These icons, among other manners of communication via the user interface 212, can be represented in varying intensities or color codes to provide an intuitive visualization of the confidence level for dust interference, thus allowing the operator to easily discern the extent of potential depth measurement errors caused by dust particles. In addition to graphical indicators, the user interface 212 can present numerical values or confidence percentages that correspond to the dust index, further informing the operator of the ambient conditions within the furrow 238 and the reliability of the depth measurements.

The user interface 212 can be designed to include other interactive elements, such as alerts or notifications, that can prompt the operator to consider operational adjustments when significant dust interference is detected. For example, upon recognition of an elevated dust index, the user interface 212 can be used to communicate a suggestion by the system 200 to alter downforce settings of the planter row unit 50, or implement other corrective measures, to counteract potential inaccuracies in furrow depth readings. By facilitating this interplay of visual cues and actionable insights, the information provided via the user interface 212 to the operator regarding the reliability, or potential unreliability, of the determinations being made by the furrow depth detection system 200 can enhance the operator's ability to ensure optimal performance of the planter row unit 50 amidst varying environmental conditions.

While Figure 8 depicts a single point cloud representation, the above discussed process for determining dust levels, if any, using at least a hot spot region 306 and/or separation threshold (Figure 9) can apply to one or more, if not all, of the images captured by the image capturing device 220 and/or used in determinations made by the system 200 using information from such images, as discussed herein.

Implementations of the subject disclosure can further assist in dynamically compensating for changes in the actual cut depth 232 that can be attributed to variations caused, for example, by errors with respect to the installation of the vision system 214 and/or from usage of the planter row unit 50. Such errors can include relatively minor discrepancies in either or both the pitch and roll angles of the vision system 214 relative to a chassis, or other portion, of the planter row unit 50. For example, Figure 10 illustrates an approach for identifying, including verifying, the actual cut depth 232 according to certain implementations. As discussed above, the geometric relationship between the image capturing device 220 and the cutting discs 62 can, for at least certain planter row units 50, be fixed, and thus the distance between the image capturing device 220 and the clean or theoretical furrow bottom 228 can remain constant, regardless of adjustments to the depth settings of the planter row unit 50. For example, in the illustrated example provided by Figure 10, the furrow bottom 228 for a clean furrow 238 generally extends along an identified trench bottom plane (*P_{trench bottom}*). Consequently, the vertical distance from the image capturing device 220 to the trench bottom plane (*P_{trench bottom}*) can consistently be at a cut depth (*D*), which can be known, for example, in millimeters (mm).

The image capturing device 220, however, is not directed straight downward toward furrow bottom 228. Thus, a central axis 308 of the field of view 224 is generally angularly offset from the furrow bottom 228 by a pitch angle (*θ*) between, for example, at least the central axis 308 of the field of view 224 and the trench bottom plane (*P_{trench bottom}*)*.* The system 200 is configured such that the central axis 308 of the field of view 224 is neither perpendicular nor parallel to at least the trench bottom plane (*P_{trench} bottom).*

As also illustrated, the laser 222 can extend about a laser plane 310. The location of the laser plane 310 can be pre-identified, such as, for example, via a prior end-of-line calibration. Such a calibration process can involve determining a precise position and alignment of the laser unit 218 and/or the associated laser plane 310 relative to one or more of the other components of the vision system 214, information in images captured by the image capturing device 220, and/or the planter row unit 50. This calibration step can assist with precisely identifying the location of the laser plane 310 of the laser 222 emitted by the laser unit 218, including with respect to other components of the planter row unit 50 and/or to the corresponding trench bottom plane (*P_{trench bottom}*) that will be formed via operation of the planter row unit 50.

The location, in a clean furrow 238, of an intersection between the trench bottom plane (*P_{trench bottom}*) and the laser plane 310 (as generally indicated in Figure 10 by "Intersection") can assist with determining, including verifying, the depth of the clean furrow corresponds to what is believed to be the actual cut depth 232 that the planter row unit 50 is set to attain. As seen, the location of the intersection can be viewed by the image capturing device 220. The particular upstream, or fore, location of this "Intersection" relative to the image capturing device 220 can be identified based on the known relative locations of the laser plane 310 and the information captured in the images by the image capturing device 220, as previously discussed above. Using at least such information and the known pitch angle (*θ*) the controller 202 can derive a corresponding vertical position or depth of the "Intersection". Moreover, at least such information can be used by the controller 202 to generate an estimated cut depth for the clean furrow 238. The estimated cut depth derived by the controller 202 using at least the above-discussed intersection-related information can then be compared to the known cut depth (*D*), which, as previously discussed, can remain constant. In such situations, variations between the estimated cut depth derived using the location of the "Intersection" and the known pitch angle (*θ*), and the cut depth (*D*) can be used to calibrate/recalibrate settings of the controller 202, the vision system 214, and/or adjust the planter row unit 50, including realignment of the vision system 214, in at least an attempt to compensate, reduce, and/or eliminate such variations.

## Claims

1. A furrow depth detection system (200) for determining whether a cut depth, as set for a planter row unit (14), for a furrow (238) is being attained by the planter row unit (14), the furrow depth detection system (200) comprising:
a vision system (214) comprising an image capturing device (220) and a laser unit (218), the image capturing device (220) positioned downstream of a cutting disc (62) of the planter row unit (14) and configured to capture a plurality of images of the furrow (238), each image of the plurality of images including a representation of an illumination provided by a laser (222) emitted into the furrow (238) by the laser unit (218) that is indicative of a vision depth of the furrow (238);
a user interface (212);
at least one processor (204); and
a memory (206) coupled with the at least one processor (204), the memory (206) including instructions that when executed by the at least one processor (204) cause the at least one processor (204) to:
transform the plurality of images to provide, for each image of the plurality of images, a point cloud representation comprising a plurality of data points, the plurality of data points corresponding to at least the illumination provided by the laser (222);
identify from the plurality of data points, from the point cloud representation for each image of the plurality of images, a base data point, the base data point corresponding to a lowest vertical data point observed by the vision system (214) for the furrow (238);
determine, using the base data point from the point cloud representation for each of the plurality of images, a representative base data point;
determine, using the representative base data point, an observed depth; and
generate one or more signals to communicate, by the user interface (212), an indication of the observed depth.

2. The furrow depth detection system (200) of claim 1, wherein the memory (206) further includes instructions that when executed by the at least one processor (204) cause the at least one processor (204) to:
compare, from the point cloud representation for each image of the plurality of images, the base data point to a predetermined threshold; and
disregard, for the determination of the representative base data point, each base point that does not satisfy the predetermined threshold.

3. The furrow depth detection system (200) of claim 1 or 2, wherein the memory (206) further includes instructions that when executed by the at least one processor (204) cause the at least one processor (204) to:
determine, from the point cloud representation of at least one image of the plurality of images, a number of the plurality of data points located within a hot spot region (306), the hot spot region (306) corresponding to an area in which an intensity of the laser (222) is elevated relative to the intensity of the laser (222) at other adjacent portions of the laser (222);
determine a spatial distribution of the plurality of data points located within the hot spot region (306); and
determine a reliability of (a) an information captured by at least one image and/or (b) a determination made using the information captured by the at least one image, based on whether the spatial distribution for the number of data points located within the hot spot region (306) satisfies a separation threshold.

4. The furrow depth detection system (200) of one of the claims 1 to 3, wherein the memory (206) further includes instructions that when executed by the at least one processor (204) cause the at least one processor (204) to generate a signal to facilitate a communication, by the user interface (212), of an indication of the reliability determined by the furrow depth detection system (200).

5. The furrow depth detection system (200) of claim 3 or 4, wherein the memory (206) further includes instructions that when executed by the at least one processor (204) cause the at least one processor (204) to identify, from the point cloud representation of at least one image, a location of the hot spot region (306).

6. The furrow depth detection system (200) of one of the claims 3 to 5, wherein the memory (206) further includes instructions that when executed by the at least one processor (204) cause the at least one processor (204) to determine the spatial distribution via a standard deviation score for the number of the plurality of data points located within the hot spot region (306).

7. The furrow depth detection system (200) of one of the claims 3 to 6, wherein the separation threshold is based on the standard deviation score as a function of the number of the plurality of data points located within the hot spot region (306).

8. The furrow depth detection system (200) of one of the claims 1 to 7, wherein the memory (206) further includes instructions that when executed by the at least one processor (204) cause the at least one processor (204) to:
selectively partition each data point of the plurality of data points from the plurality of images into one image segment of a plurality of image segments, the plurality of image segments corresponding to at least different portions of the furrow (238), the data points for each image segment of the plurality of image segments providing a plurality of partitioned data segments for that image segment;
aggregate the partitioned data segments for each of the plurality of image segments to construct an average image representative of the furrow (238); and
generate, using a set threshold, a binarized image of the average image representative of a profile of the furrow (238),
wherein the base data point is identified from the binarized image, the base data point.

9. The furrow depth detection system (200) of one of the claims 1 to 8, wherein the memory (206) further includes instructions that when executed by the at least one processor (204) cause the at least one processor (204) to isolate, in the binarized image, a furrow profile from other portions of the furrow (238).

10. The furrow depth detection system (200) of claim 8 or 9, wherein the set threshold corresponds to a brightness intensity value.

11. The furrow depth detection system (200) of one of the claims 3 to 10, wherein the memory (206) further includes instructions that when executed by the at least one processor (204) cause the at least one processor (204) to:
determine, from the point cloud representation of at least one image of the plurality of images, a number of data points located within a hot spot region (306) corresponding to an area in which an intensity of the laser (222) is elevated relative to the intensity of the laser (222) at other adjacent portions of the laser (222); and
determine a reliability of (a) an information captured by at least one image and/or (b) a determination made using the information captured by the at least one image, based on whether a spatial distribution for the number of data points located within the hot spot region (306) satisfies a separation threshold.

12. The furrow depth detection system (200) of one of the claims 1 to 11, wherein the memory (206) further includes instructions that when executed by the at least one processor (204) cause the at least one processor (204) to generate a signal to facilitate a communication, by the user interface (212), of an indication of the reliability determined by the furrow depth detection system (200).

13. The furrow depth detection system (200) of one of the claims 3 to 12, wherein the memory (206) further includes instructions that when executed by the at least one processor (204) cause the at least one processor (204) to identify, from the point cloud representation of at least one image, a location of the hot spot region (306).

14. The furrow depth detection system (200) of one of the claims 3 to 13, wherein the memory (206) further includes instructions that when executed by the at least one processor (204) cause the at least one processor (204) to determine the spatial distribution via a standard deviation score for the number of the plurality of data points located within the hot spot region (306).

15. The furrow depth detection system (200) of one of the claims 3 to 14, wherein the separation threshold is based on the standard deviation score as a function of the number of the plurality of data points located within the hot spot region (306).
